# FASCICULE DE BREVET EUROPEEN

(11) **EP 1 445 169 B1**
(45) Date de publication et mention de la délivrance du brevet: **17.05.2006**
(21) Numéro de dépôt: 03293053.9
(22) Date de dépôt: 05.12.2003
(51) Int. Cl.: B62D 1/187

(54) **Pivot glissant d'une colonne de direction réglable de véhicule automobile**
Gleitdrehlager einer verstellbaren Lenksäule eines Kraftfahrzeuges
Sliding pivot of an adjustable steering column for a motor vehicle

(30) Priorité: 10.02.2003 FR 0301573
(43) Date de publication de la demande: 11.08.2004
(73) Titulaire: NACAM France S.A., 41000 Vendome (FR)
(72) Inventeur: Gauchenot, Benjamin, 41000 Blois (FR); Saudubray, Eric, 41000 Saint Sulpice (FR)
(74) Mandataire: Cabinet Martinet & Lapoux

(56) Documents cités:
- US-A- 4 656 888
- PATENT ABSTRACTS OF JAPAN vol. 2000, no. 04, 31 août 2000 (2000-08-31) -& JP 2000 016303 A (TOYOTA MOTOR CORP), 18 janvier 2000 (2000-01-18)

## Description

La présente invention se rapporte à une colonne de direction réglable de véhicule automobile, ladite colonne de direction comportant un dispositif de pivot glissant permettant un pivotement et un coulissement pour effectuer le réglage en hauteur et en profondeur désiré. Une telle colonne de direction, comportant les caractéristiques énoncées dans le préambule de la revendication 1, est connue du document US4656888A.

Il existe de nombreux dispositifs de colonne de direction réglable, notamment ceux constitués par un double coulissement en hauteur et en profondeur. Lorsque la colonne de direction est en position verrouillée, ces dispositifs ne rattrapent pas tous les jeux, ce qui entraîne une dégradation due à la fréquence propre de ces dispositifs.

Le but de la présente invention est de proposer une colonne de direction de véhicule automobile avec un pivot glissant conçu de manière à rattraper tous les jeux, c'est-à-dire à récupérer le jeu transversal et le jeu vertical ou en hauteur, tout en respectant l'encombrement de ladite colonne de direction et les efforts de réglage axiaux.

Le dispositif de l'invention s'applique à une colonne de direction de véhicule automobile comprenant un ensemble de corps de colonne comportant un tube-corps, dans lequel est monté un arbre de direction tournant autour d'un axe de direction. L'ensemble de corps de colonne est monté sur un ensemble support solidaire de la structure du véhicule, ladite colonne de direction étant réglable en hauteur et en profondeur avec un système de serrage permettant d'avoir une position verrouillée et une position déverrouillée, et dont l'axe de serrage est sensiblement perpendiculaire au plan vertical passant par l'axe de direction, ladite colonne de direction comportant un dispositif de pivot glissant présentant les caractéristiques suivantes :
- l'ensemble corps de colonne comporte deux éléments latéraux disposés de part et d'autre du plan vertical, les deux éléments latéraux étant reliés par au moins un élément de raccordement ;
- chaque élément latéral comporte un élément d'articulation solidaire dudit élément latéral qui peut ainsi tourner autour de l'axe de l'élément d'articulation qui est l'axe de pivotement, les axes des deux éléments d'articulation étant dans le prolongement l'un de l'autre suivant un axe de pivotement sensiblement perpendiculaire au plan vertical ;
- l'ensemble support comporte deux montants latéraux reliés l'un à l'autre par un élément de raccordement et disposés de part et d'autre du plan vertical, de manière que le corps de colonne puisse être disposé entre les deux montants ;
ladite colonne de direction selon l'invention étant caractérisée en ce que :
- chaque montant latéral comporte un enfoncement latéral dirigé vers le plan vertical, et constitué par deux faces de coulissement dont chacune est liée d'une part audit montant latéral et d'autre part à un fond de raccordement reliant lesdites faces de coulissement ;
- les deux faces de coulissement ont un axe de coulissement qui est parallèle à un même plan de coulissement qui passe par l'axe de pivotement et qui est sensiblement perpendiculaire au plan vertical, chaque axe de déplacement étant parallèle audit plan vertical,
- les deux faces de coulissement sont inclinées par rapport au plan de coulissement de façon à converger l'une vers l'autre pour n'avoir aucun déplacement en hauteur ;
- chaque fond de raccordement est muni d'un trou oblong avec un axe de coulissement appartenant au plan de coulissement ;
- une entretoise à butée axiale est montée sur chaque élément d'articulation et est disposée entre la face externe de l'élément latéral correspondant et la face interne d'une tête aménagée à l'extrémité externe de l'élément d'articulation ;
- un ensemble de deux patins de réglage est aménagé sur chaque élément d'articulation, et ils sont disposés de part et d'autre du plan de coulissement entre la face de coulissement correspondante et l'entretoise à butée axiale ;
- un ressort de compression est monté sur l'élément d'articulation correspondant, il s'appuie d'une part sur l'entretoise à butée axiale s'appliquant contre la tête et il s'applique d'autre part contre les deux patins de réglage correspondants, avec une précontrainte qui, associée avec l'inclinaison des deux faces de coulissement, permet d'avoir un coulissement sans jeu lors du réglage de la colonne de direction en position déverrouillée, et aucun déplacement en hauteur lors d'un choc en position verrouillée, tout en conservant un effort de coulissement limité.

Selon l'invention, chaque élément d'articulation peut avoir deux modes de réalisation. Selon un premier mode de réalisation, chaque élément d'articulation est constitué par une vis avec une portion cylindrique lisse, une tête à son extrémité externe et une portion filetée à son extrémité interne qui se fixe dans un trou fileté de l'élément latéral correspondant du corps de colonne de direction. Selon un deuxième mode de réalisation, chaque élément d'articulation est constitué par un rivet avec une tête à son extrémité externe et une portion cylindrique lisse, dont l'extrémité interne s'engage dans un trou lisse, pour être déformée sous forme de collerette sur la face interne de l'élément latéral correspondant.

L'entretoise à butée axiale peut être réalisée de deux façons. Selon une première façon, l'entretoise à butée axiale est un élément séparé comportant une portion cylindrique constituée par un tube dont l'extrémité externe est constituée par une collerette s'appliquant contre la tête de l'élément d'articulation d'une part, et contre le ressort de compression d'autre part, et dont l'extrémité interne s'applique contre la face externe de l'élément latéral correspondant. Selon une deuxième façon, l'entretoise à butée axiale est intégrée à l'élément d'articulation dont la tête est une collerette et dont la portion cylindrique lisse a le diamètre de l'entretoise à butée axiale.

Avantageusement, chaque patin de réglage comporte un élément d'appui avec un patin qui a un demi trou de passage d'axe perpendiculaire à l'élément d'appui, ledit patin ayant une section trapézoïdale perpendiculaire au plan de coulissement et parallèle audit axe avec une face inclinée par rapport à l'élément d'appui, le demi trou cylindrique coopérant avec la portion cylindrique de l'entretoise à la butée axiale, la face inclinée s'appliquant contre la face de coulissement correspondante et l'élément d'appui s'appliquant contre le ressort de compression, qui peut être une rondelle ressort.

Afin de faciliter le montage, les deux patins de réglage d'un même élément d'articulation sont reliés l'un à l'autre par une jonction.

De plus, chaque patin de réglage comporte un crochet externe et deux crochets internes.

Afin d'améliorer le coulissement, chaque patin de réglage comporte des stries qui sont aménagées sur la face inclinée, pour constituer des réserves de graisse.

Selon l'invention et pour chaque élément d'articulation, les deux faces de coulissement peuvent avoir la même inclinaison par rapport au plan de coulissement. Enfin, la structure de chacune des deux articulations et de chacune des deux faces de coulissement peuvent être non symétriques ou symétriques par rapport au plan vertical de l'axe de direction et par rapport au plan de coulissement.

Le dispositif de pivot glissant selon l'invention présente ainsi l'avantage de récupérer le jeu transversal et le jeu en hauteur par l'intermédiaire des éléments d'articulation qui coopèrent avec les faces de coulissement, agencées sur l'ensemble support, au moyen de patins munis d'une face inclinée afin d'avoir un dispositif irréversible. De plus, le rattrapage de tous les jeux évite la dégradation de la colonne de direction due à sa fréquence propre.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est une vue en perspective du dispositif de pivot glissant d'une colonne de direction selon l'invention ;
- la figure 2 est une coupe transversale de l'ensemble du pivot glissant passant par l'axe de pivotement suivant le plan II-II de la figure 1 ;
- la figure 3 est une vue éclatée en perspective suivant III de la figure 2 des différents éléments d'un des deux ensembles d'articulation ;
- la figure 4 est une vue interne en perspective des deux patins de l'ensemble d'articulation représenté sur la figure 3 ;
- la figure 5 est une vue externe en perspective analogue à la vue de la figure 3 des deux patins de l'ensemble d'articulation ;
- la figure 6 est une coupe transversale partielle analogue à la figure 2, d'un autre mode de réalisation de l'ensemble d'articulation ;
- la figure 7 est une coupe transversale partielle analogue à la figure 6, d'un autre mode de réalisation de l'ensemble d'articulation ;
- la figure 8 est une coupe partielle d'une variante de réalisation de la figure 7.

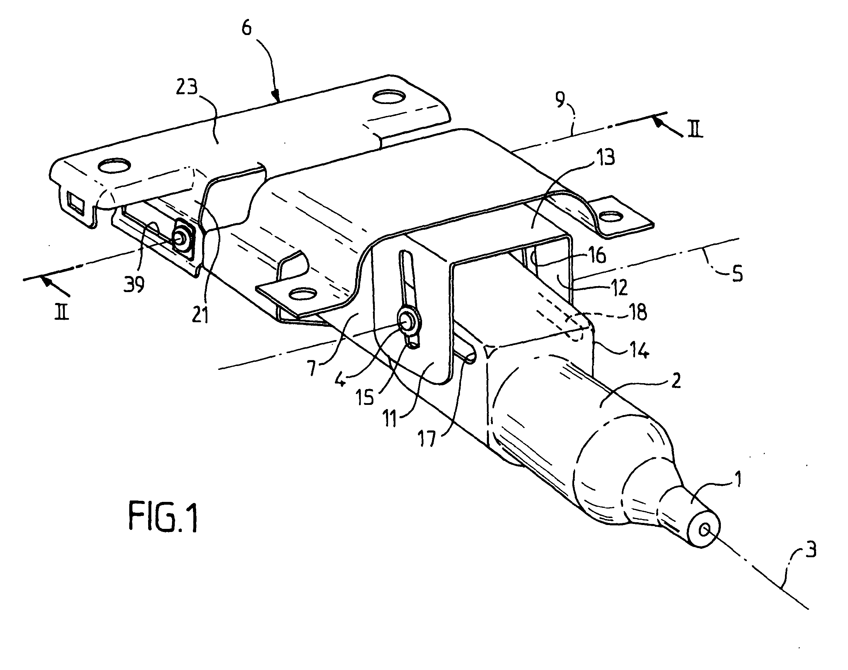

Comme on peut le voir sur la figure 1, l'invention se rapporte à un dispositif de pivot glissant de colonne de direction de véhicule automobile. La colonne de direction comprend un ensemble de corps de colonne 7, qui comporte un tube-corps 2 dans lequel est monté un arbre de direction 1 tournant autour d'un axe de direction 3. L'ensemble de corps de colonne 7 est monté sur un ensemble 6 qui est fixé à la structure du véhicule.

La colonne de direction est réglable en hauteur ou inclinaison et en profondeur. Le tube-corps 2 est muni d'un carré renfort 14, qui est relié à l'ensemble support 6 par un système de réglage en position en hauteur et en profondeur.

La colonne de direction comporte un système de serrage 4, qui permet d'avoir la position verrouillée et la position déverrouillée de ladite colonne de direction.

Le système de serrage 4 est disposé et agit suivant un axe de serrage 5, qui est sensiblement perpendiculaire au plan vertical 8 passant par l'axe de direction 3.

L'ensemble support 6 comporte deux montants 11 et 12, qui sont reliés par un élément de raccordement 13.

Le carré renfort 14 avec le tube-corps 2 sont disposés entre les deux montants 11 et 12, qui sont sensiblement verticaux c'est-à-dire qu'ils sont sensiblement parallèles au plan vertical 8 passant par l'axe de direction 3.

Afin de laisser passer la tige du système de serrage 4, les montants 11 et 12 sont munis d'un trou oblong correspondant 15 et 16, qui sont orientés dans le sens vertical pour le réglage en hauteur.

Les deux côtés du carré renfort 14 faisant face aux montants 11 et 12 sont également munis d'un trou oblong correspondant 17 et 18, qui sont orientés dans le sens de l'axe de direction 3 pour le réglage en profondeur.

Dans la suite de la description et pour un même élément, on appellera interne ou intérieur par rapport à l'axe de direction 3 ou par rapport au plan vertical 8, ce qui est le plus près de cet axe de direction 3 ou de ce plan vertical 8, et externe ou extérieur ce qui en est le plus éloigné.

Le dispositif de réglage en position est bloqué à la position choisie par le système de serrage 4. Le dispositif de serrage 4 a deux positions : une position déverrouillée dans laquelle le dispositif de serrage est débloqué pour permettre le réglage demandé de la colonne de direction, et une position verrouillée dans laquelle le dispositif de serrage est bloqué pour garantir le maintien de la position choisie.

Selon l'invention, la colonne de direction comporte un dispositif de pivot glissant ayant une fonction d'articulation pour le réglage en hauteur, et une fonction de coulissement pour le réglage en profondeur. Chacune de ces deux fonctions peuvent être utilisées séparément avec un architecture correspondante, ou ensemble comme c'est le cas de la description ci-après. Ledit dispositif de pivot glissant est monté sur l'ensemble support 6 du côté de l'avant du véhicule et suivant un axe de pivotement 9. L'axe de pivotement 9 est sensiblement perpendiculaire au plan vertical 8, et il permet le réglage en hauteur. Un plan de coulissement 10 passe par l'axe de pivotement 9 et est sensiblement perpendiculaire au plan vertical 8. Le plan de coulissement 10 permet le réglage en profondeur.

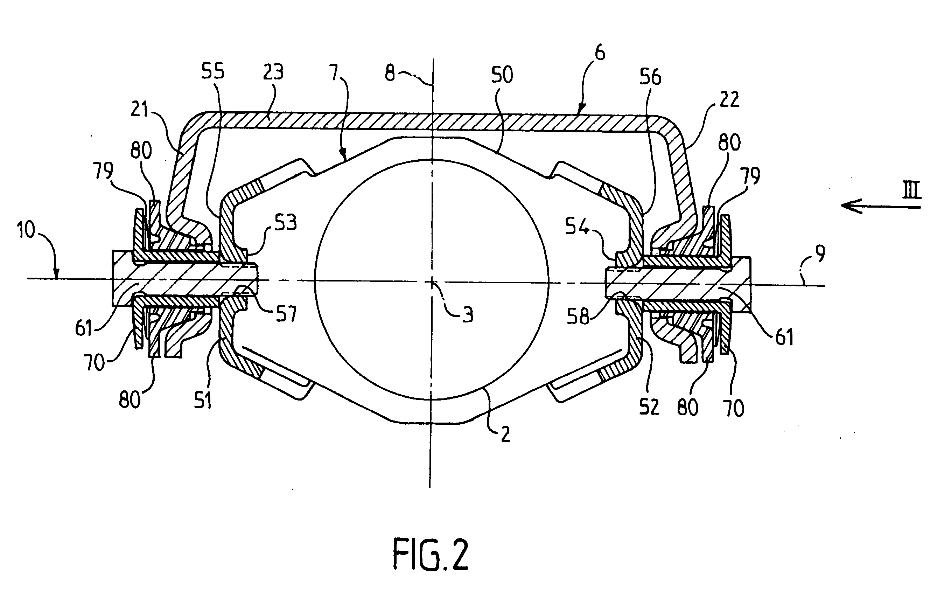

La figure 2 est une coupe transversale de l'ensemble du pivot glissant, qui passe par l'axe de pivotement 9 et qui est perpendiculaire au plan de coulissement 10.

L'ensemble support 6 comporte deux montants latéraux 21 et 22 qui sont disposés de part et d'autre du plan vertical 8, et sur la partie de l'élément support 6 située du côté de l'avant du véhicule. Les deux montants 21 et 22 sont reliés par un élément de raccordement 23, de manière que le corps de colonne 7 puisse être disposé entre les deux montants 21 et 22.

L'ensemble du corps de colonne 7 comporte deux éléments latéraux 51 et 52, qui sont disposés de part et d'autre du plan vertical 8. Les deux éléments latéraux 51 et 52 sont reliés par un élément de raccordement 50 et par un élément de raccordement inférieur.

Chaque élément latéral 51 et 52 comporte un élément d'articulation constitué par une vis 61, qui est solidaire dudit élément latéral 51 et 52.

L'élément latéral 51 a une face interna 53 et une face externe 55 avec un trou fileté 57. L'élément latéral 52 a une face interne 54 et une face externe 56 avec un trou fileté 58. Les trous filetés 57 et 58 ont le même axe, qui est l'axe de pivotement 9.

Dans la description, les éléments ou portions d'éléments ayant la même fonction auront la même référence, ce qui ne veut pas dire qu'ils soient identiques comme cela est représenté sur les dessins.

Chaque élément latéral 51 et 52 peut ainsi tourner autour de l'axe de l'élément d'articulation correspondant qui est son axe de pivotement. Les axes des deux éléments d'articulation ou des deux vis 61 sont dans le prolongement l'un de l'autre suivant un axe, qui est l'axe de pivotement 9.

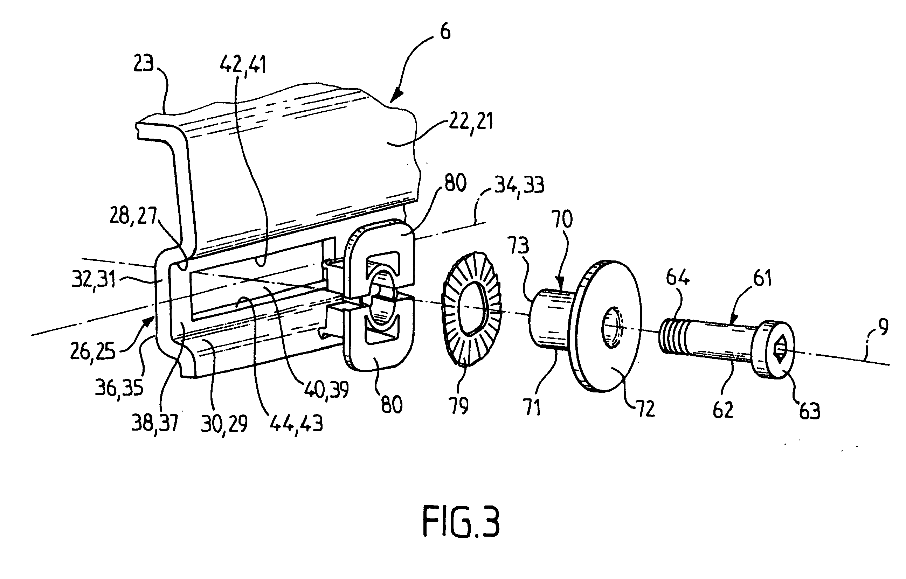

Comme cela est représenté sur les figures 2 et 3, chaque montant latéral 21 et 22 comporte un enfoncement latéral correspondant 25 et 26, qui est dirigé vers le plan vertical 8. L'enfoncement latéral 25 est constitué par deux faces de coulissement 27 et 29, dont chacune est liée d'une part au montant latéral 21, et d'autre part à un fond de raccordement 31 qui relie lesdites faces de coulissement 27 et 29. Le fond de raccordement 31 a une face interne 35 et une face externe 37, avec un trou oblong 39 ayant un axe de coulissement 33 et deux faces de glissement 41 et 43 parallèles audit axe.

L'enfoncement latéral 26 est constitué par deux faces de coulissement 28 et 30, dont chacune est liée d'une part au montant latéral 22, et d'autre part à un fond de raccordement 32 qui relie lesdites faces de coulissement 28 et 30. Le fond de raccordement 32 a une face interne 36 et une face externe 38 avec un trou oblong 40 ayant un axe de coulissement 34 et deux faces de glissement 42 et 44 parallèles audit axe.

Les deux axes de coulissement 33 et 34 constituent le plan de coulissement 10, qui passe par l'axe de pivotement 9 et qui est sensiblement perpendiculaire au plan vertical 8.

Les deux faces de coulissement 27 et 29 ainsi que les deux faces de coulissement 28 et 30 ont chacune un axe de coulissement qui est parallèle au plan de coulissement 10.

Les deux faces de coulissement 27 et 29 ainsi que les deux faces de coulissement 28 et 30 sont inclinées par rapport au plan de coulissement 10 de façon à converger l'une vers l'autre. Cet agencement offre l'avantage de n'avoir aucun déplacement en hauteur.

Chaque ensemble d'articulation comporte : un élément d'articulation constitué par la vis 61, une entretoise à butée axiale 70, un ensemble de deux patins de réglage 80 et un ressort de compression 79.

L'entretoise à butée axiale 70 est montée sur la vis 61, et est disposée entre la face externe 55 ou 56 de l'élément latéral 51 ou 52 correspondant et la face interne d'une tête 63 aménagée à l'extrémité externe de la vis 61.

L'ensemble des deux patins de réglage 80 est aménagé sur chaque vis 61 et ils sont disposés de part et d'autre du plan de coulissement 10. Chaque patin de réglage 80 est disposé entre la face de coulissement correspondante 27, 29 ou 28, 30 et l'entretoise à butée axiale 70.

Le ressort de compression 79 est monté sur l'entretoise à butée axiale 70. Il s'appuie d'une part sur l'entretoise à butée axiale 70 s'appliquant contre la tête 63, et il s'applique d'autre part contre les deux patins de réglage 80 correspondants. La précontrainte du ressort 79 est déterminée de manière à avoir un glissement sans jeu du pivot glissant, lors du réglage de la colonne de direction en position déverrouillée, et aucun déplacement en hauteur lors d'un choc en position verrouillée.

La vis 61 a une portion cylindrique lisse 62, une tête 63 a son extrémité externe et une portion filetés 64 à son extrémité interne. La portion filetée 64 se fixe dans le trou fileté 57 ou 58 de l'élément latéral correspondant 51 ou 52 du corps de colonne 7.

L'entretoise à butée axiale 70 est un élément séparé de l'élément d'articulation, et elle comporte une portion cylindrique constituée par un tube 71. Ledit tube 71 a une extrémité externe, qui est constituée par une collerette 72 s'appliquant contre la tête 63 de l'élément d'articulation d'une part, et contre le ressort de compression 79 d'autre part. Le tube 71 a une extrémité interne 73 qui s'applique contre la face externe 55 ou 56 de l'élément latéral 51 ou 52 correspondant.

Le ressort de compression est constitué par une rondelle ressort 79.

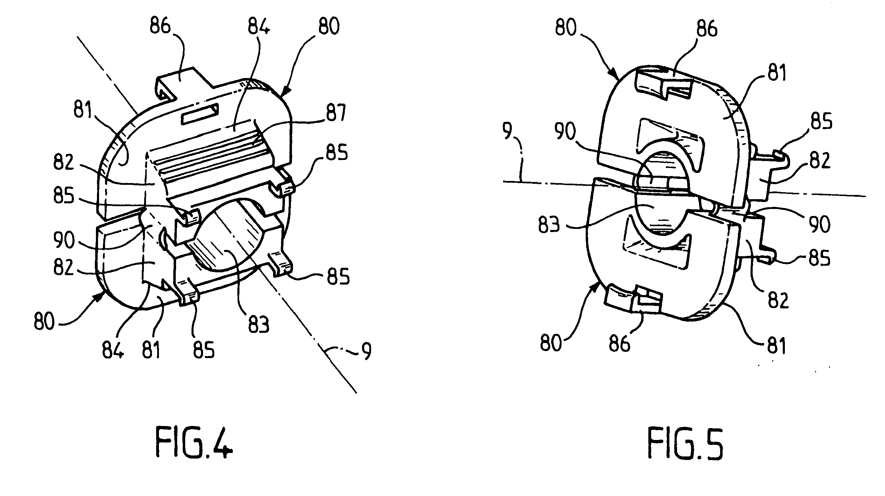

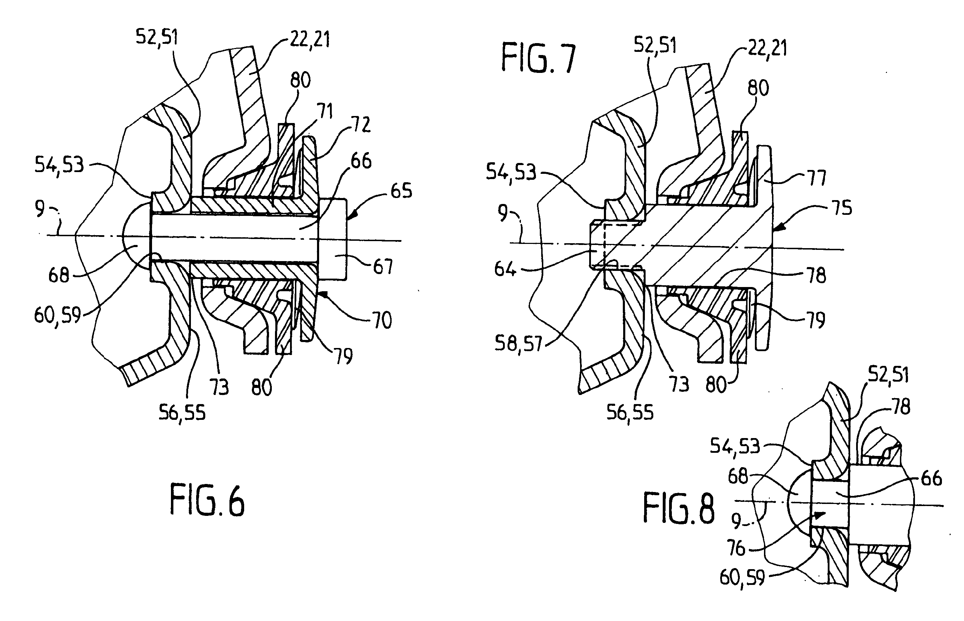

Comme cela est représenté sur les figures 4 et 5, chaque patin de réglage 80 comporte un élément d'appui 81 avec un patin 82, qui ont un demi-trou de passage 83, dont l'axe est perpendiculaire audit élément d'appui 81. Ledit patin 82 a une section trapézoïdale qui est perpendiculaire au plan de coulissement 9 et parallèle audit axe du demi-trou de passage 83 qui est l'axe de pivotement 9.

Le patin 82 est muni d'une face inclinée 84 par rapport à l'élément d'appui 81. Le demi-trou de passage 83 est cylindrique et coopère avec la portion cylindrique 71 de l'entretoise à butée axiale 70. La face inclinée 84 a une pente déterminée de manière à s'appliquer contre la face de coulissement correspondante 27, 29 ou 28, 30. L'élément d'appui 81 s'applique contre le ressort de compression qui est la rondelle ressort 79. De plus des stries 87 sont aménagées sur la face inclinée 84, ce qui permet de constituer des réserves de graisse pour améliorer les conditions de coulissement.

Les deux patins de réglage 80 d'un même élément d'articulation sont reliés l'un à l'autre par une jonction 90, ce qui facilite le montage.

Afin également d'améliorer les conditions de montage, chaque patin de réglage 80 comporte un crochet externe 86 et deux crochets internes 85.

Dans une variante de réalisation représentée sur la figure 6, chaque élément d'articulation est constitué par un rivet 65. Le rivet 65 a une tête 67 à son extrémité externe. Le rivet 65 est constitué par un portion cylindrique lisse 66, dont l'extrémité interne s'engage dans un trou lisse 59 ou 60 aménagé dans l'élément latéral 51 ou 52 correspondant et dont l'axe est l'axe de pivotement 9. L'extrémité interne du rivet 65 est déformée sous la forme d'une collerette 68 sur la face interne 53 ou 54 de l'élément latéral correspondant 51 ou 52.

Dans deux variantes de réalisation représentées sur les figures 7 et 8, l'entretoise à butée axiale est intégrée à l'élément d'articulation 75 ou 76, dont la tête est une collerette 77 et dont la portion cylindrique lisse 78 a le diamètre du tube 71 de l'entretoise à butée axiale 70.

Dans le cas de la figure 7, l'extrémité interne est constituée par la portion filetée 64. Dans le cas de la figure 8, l'extrémité interne est constituée par l'extrémité interne de la portion cylindrique lisse 66 avec la collerette 68.

Pour une meilleure compréhension du fonctionnement du pivot glissant selon l'invention, l'ensemble du pivot glissant représenté sur les figures est divisé en deux parties, de part et d'autre du plan vertical 8, qui sont parfaitement symétriques par rapport audit plan vertical 8.

De plus, la structure de l'ensemble de chacune des deux articulations 61, 65, 75 ou 76, et de chacune des deux faces de coulissement correspondantes sont symétriques par rapport au plan de coulissement 10.

Cependant, la symétrie n'est pas une condition de fonctionnement, et le même type de liaison pivot glissant selon l'invention peut être réalisé avec deux parties non symétriques par rapport au plan vertical 8 et par rapport au plan de coulissement 10.

Dans tous les cas, le fonctionnement des deux parties sont identiques.

Chaque ressort de compression 79 présente l'avantage de maintenir les faces inclinées 84 des patins de réglage 80 en contact avec les faces de coulissement 27, 29 et 28, 30, et ceci quel que soit la position de l'ensemble du pivot glissant dans les trous oblongs 39 et 40 des montants latéraux 21 et 22 de l'ensemble support 6.

L'angle d'inclinaison des faces de coulissement, la précontrainte du ressort de compression 79 et les coefficients de frottement entre les différents éléments permettent d'obtenir un système dont l'effet de coulissement est maîtrisé et d'avoir une mise en contrainte des patins de réglage 80 sur l'ensemble support 6. Ainsi, un effort appliqué verticalement de l'ensemble support 6 sur les patins de réglage 80 n'a pas d'incidence sur la précharge du ressort de compression 79.

Le système est donc irréversible, c'est-à-dire qu'un effort vertical est sans influence sur la force exercée sur le ressort.

La fonction pivot est obtenue par la rotation de l'entretoise à butée axiale 70 liée au corps de colonne 7 mobile à l'intérieur des patins de réglage 80.

Le dispositif selon l'invention présente ainsi l'avantage de réaliser une liaison à pivot glissant qui soit sans jeux francs, avec une raideur verticale importante, et avec un effort de coulissement faible.

## Revendications

1. Colonne de direction de véhicule automobile comprenant un ensemble de corps de colonne (7) comportant un tube-corps (2) dans lequel est monté un arbre de direction (1) tournant autour d'un axe de direction (3), l'ensemble de corps de colonne (7) étant monté sur un ensemble support (6) solidaire de la structure du véhicule, ladite colonne de direction étant réglable en hauteur et en profondeur avec un système de serrage (4) permettant d'avoir une position verrouillée et une position déverrouillée, et dont l'axe de serrage (5) est sensiblement perpendiculaire au plan vertical (8) passant par l'axe de direction (3), ladite colonne de direction comportant un dispositif de pivot glissant, ayant une fonction d'articulation et une fonction de coulissement, qui comprend les caractéristiques suivantes :
- l'ensemble de corps de colonne (7) comporte deux éléments latéraux (51, 52) disposés de part et d'autre du plan vertical (8), les deux éléments latéraux (51, 52) étant reliés par au moins un élément de raccordement (50) ;
- chaque élément latéral (51, 52) comporte un élément d'articulation (61, 65) solidaire dudit élément latéral (51, 52) qui peut ainsi tourner autour de l'axe de l'élément d'articulation (61, 65) qui est l'axe de pivotement, les axes des deux éléments d'articulation (61, 65) étant dans le prolongement l'un de l'autre suivant un axe de pivotement (9) sensiblement perpendiculaire au plan vertical (8) ;
- l'ensemble support (6) comporte deux montants latéraux (21, 22) reliés l'un à l'autre par un élément de raccordement (23) et disposés de part et d'autre du plan vertical (8), de manière que le corps de colonne (7) puisse être disposé entre les deux montants (21, 22) ;
ladite colonne de direction étant **caractérisée en ce que** :
- chaque montant latéral (21, 22) comporte un enfoncement latéral (25, 26) dirigé vers le plan vertical (8), et constitué par deux faces de coulissement (27, 29-28, 30) dont chacune est liée d'une part audit montant latéral (21, 22) et d'autre part à un fond de raccordement (31, 32) reliant lesdites faces de coulissement (27, 29-28, 30) ;
- les deux faces de coulissement (27, 29-28, 30) ont un axe de coulissement qui est parallèle à un même plan de coulissement (10) qui passe par l'axe de pivotement (9) et qui est sensiblement perpendiculaire au plan vertical (8), chaque axe de déplacement étant parallèle audit plan vertical ;
- les deux faces de coulissement (27, 29-28, 30) sont inclinées par rapport au plan de coulissement (10) de façon à converger l'une vers l'autre pour n'avoir aucun déplacement en hauteur ;
- chaque fond de raccordement (31, 32) est muni d'un trou oblong (39, 40) avec un axe de coulissement (33, 34) appartenant au plan de coulissement (10) ;
- une entretoise à butée axiale (70) est montée sur chaque élément d'articulation (61, 65) et est disposée entre la face externe (55, 56) de l'élément latéral (51, 52) correspondant et la face interne d'une tête (63) aménagée à l'extrémité externe de l'élément d'articulation (61, 65) ;
- un ensemble de deux patins de réglage (80) est aménagé sur chaque élément d'articulation (61, 65), et ils sont disposés de part et d'autre du plan de coulissement (10) entre la face de coulissement correspondante (27, 29-28, 30) et l'entretoise à butée axiale (70) ;
- un ressort de compression (79) est monté sur l'entretoise à butée axiale (70) de l'élément d'articulation correspondant (61, 65), il s'appuie d'une part sur l'entretoise à butée axiale (70) s'appliquant contre la tête (63, 67) et il s'applique d'autre part contre les deux patins de réglage (80) correspondants, avec une précontrainte déterminée de manière à avoir un coulissement sans jeu lors du réglage de la colonne de direction en position déverrouillée, et aucun déplacement en hauteur lors d'un choc en position verrouillée.

2. Colonne de direction selon la revendication 1, **caractérisé en ce que** chaque élément d'articulation est constitué par une vis (61) avec une portion cylindrique lisse (62), une tête (63) à son extrémité externe et une portion filetée (64) à son extrémité interne qui se fixe dans un trou fileté (57, 58) de l'élément latéral (51, 52) correspondant du corps de colonne (7) de direction.

3. Colonne de direction selon la revendication 1, **caractérisé en ce que** chaque élément d'articulation est constitué par un rivet (65) avec une tête (67) à son extrémité externe et une portion cylindrique lisse (66), dont l'extrémité interne s'engage dans un trou lisse (59, 60) de l'élément latéral (51, 52) correspondant, pour être déformée sous forme de collerette (68) sur la face interne (53, 54) de l'élément latéral correspondant (51, 52).

4. Colonne de direction selon la revendication 2 ou 3, **caractérisé en ce que** l'entretoise à butée axiale (70) est un élément séparé comportant une portion cylindrique constituée par un tube (71) dont l'extrémité externe est constituée par une collerette (72) s'appliquant contre la tête (63, 67) de l'élément d'articulation (61, 65) d'une part, et contre le ressort de compression (79) d'autre part, et dont l'extrémité interne (73) s'applique contre la face externe (55, 56) de l'élément latéral (51, 52) correspondant.

5. Colonne de direction selon la revendication 2 ou 3, **caractérisé en ce que** l'entretoise à butée axiale est intégrée à un élément d'articulation (75, 76) dont la tête est une collerette (77) et dont la portion cylindrique lisse (78) a le diamètre de l'entretoise à butée axiale.

6. Colonne de direction selon la revendication 1, **caractérisé en ce que** chaque patin de réglage (80) comporte un élément d'appui (81) avec un patin (82) qui ont un demi trou de passage (83) d'axe perpendiculaire à l'élément d'appui (81), ledit patin (82) ayant une section trapézoïdale perpendiculaire au plan de coulissement (9) et parallèle audit axe avec une face inclinée (84) par rapport à l'élément d'appui (81), le demi trou cylindrique (83) coopérant avec la portion cylindrique (71, 78) de l'entretoise à la butée axiale (70, 75, 76), la face inclinée (84) s'appliquant contre la face de coulissement correspondante (27, 29-28, 30) et l'élément d'appui (81) s'appliquant contre le ressort de compression (79).

7. Colonne de direction selon la revendication 1, **caractérisé en ce que** le ressort de compression est une rondelle ressort (79).

8. Colonne de direction selon la revendication 6, **caractérisé en ce que** les deux patins de réglage (80) d'un même élément d'articulation (61, 65) sont reliés l'un à l'autre par une jonction (90) pour faciliter le montage.

9. Colonne de direction selon la revendication 6, **caractérisé en ce que** chaque patin de réglage (80) comporte un crochet externe (86) pour faciliter le montage.

10. Colonne de direction selon la revendication 6, **caractérisé en ce que** chaque patin de réglage (80) comporte deux crochets internes (85) pour faciliter le montage.

11. Colonne de direction selon la revendication 6, **caractérisé en ce que** chaque patin de réglage (80) comporte des stries (87) qui sont aménagées sur la face inclinée (84), pour constituer des réserves de graisse.

12. Colonne de direction selon l'une quelconque des revendications précédentes, **caractérisé en ce que** pour chaque élément d'articulation (61, 65), les deux faces de coulissement (27, 29-28, 30) ont la même inclinaison par rapport au plan de coulissement (10).

13. Colonne de direction selon l'une quelconque des revendications 1 à 11, **caractérisée en ce que** la structure de chacune des deux articulations (61, 65) et de chacune des deux faces de coulissement sont non symétriques par rapport au plan vertical (8) de l'axe de direction (3) et par rapport au plan de coulissement (10).

14. Colonne de direction selon la revendication 12, **caractérisée en ce que** la structure de chacune des deux articulations (61, 65) et de chacune des deux faces de coulissement sont symétriques par rapport au plan vertical (8) de l'axe de direction (3) et par rapport au plan de coulissement (10).

## Claims

1. Steering column for a motor vehicle comprising a column body assembly (7) comprising a body tube (2) in which is mounted a steering shaft (1) rotating about a steering axis (3), the column body assembly (7) being mounted on a support assembly (6) integral with the structure of the vehicle, the said steering column being adjustable in height and in depth with a clamping system (4) making it possible to have a locked position and an unlocked position, and whose clamping axis (5) is substantially perpendicular to the vertical plane (8) passing through the steering axis (3), the said steering column comprising a sliding pivot device, having an articulation function and a sliding function, which comprises the following characteristics:
- the column body assembly (7) comprises two lateral elements (51, 52) disposed on either side of the vertical plane (8), the two lateral elements (51, 52) being connected by at least one connecting element (50) ;
- each lateral element (51, 52) comprises an articulation element (61, 65) integral with the said lateral element (51, 52) which can thus rotate about the axis of the articulation element (61, 65) which is the pivoting axis, the axes of the two articulation elements (61, 65) being in alignment with each other along a pivoting axis (9) substantially perpendicular to the vertical plane (8);
- the support assembly (6) comprises two lateral uprights (21, 22) connected to each other by a connecting element (23) and disposed on either side of the vertical plane (8), in such a way that the column body (7) can be disposed between the two uprights (21, 22);
the said steering column being **characterized in that**:
- each lateral upright (21, 22) comprises a lateral recess (25, 26) directed towards the vertical plane (8) and constituted by two sliding faces (27, 29-28, 30) each of which is connected on the one hand to the said lateral upright (21, 22) and on the other hand to a connecting base (31, 32) connecting the said sliding faces (27, 29-28, 30);
- the two sliding faces (27, 29-28, 30) have a sliding axis which is parallel with a same sliding plane (10) which passes through the pivoting axis (9) and which is substantially perpendicular to the vertical plane (8), each direction of displacement being parallel with the said vertical plane;
- the two sliding faces (27, 29-28, 30) are inclined with respect to the sliding plane (10) in such a way as to converge towards each other in such a way as to have no displacement in height;
- each connecting base (31, 32) is provided with an oblong hole (39, 40) with a sliding axis (33, 34) being part of the sliding plane (10);
- a crosspiece with an axial stop (70) is mounted on each articulation element (61, 65) and is disposed between the external face (55, 56) of the corresponding lateral element (51, 52) and the internal face of a head (63) formed on the external end of the articulation element (61, 65);
- a set of two adjustment sliders (80) is fitted on each articulation element (61, 65), and they are disposed on either side of the sliding plane (10) between the corresponding sliding face (27, 29-28, 30) and the crosspiece with an axial stop (70);
- a compression spring (79) is mounted on the crosspiece with an axial stop (70) of the corresponding articulation element (61, 65), it bears on the one hand on the crosspiece with an axial stop (70), being applied against the head (63, 67), and it is applied on the other hand against the corresponding two adjustment sliders (80), with a pre-stress determined in such a way as to have sliding without play during the adjustment of the steering column in the unlocked position, and no displacement in height during a shock in the locked position.

2. Steering column according to Claim 1, **characterized in that** each articulation element is constituted by a screw (61) with a smooth cylindrical portion (62), a head (63) at its external end and a threaded portion (64) at its internal end which is fixed in a threaded hole (57, 58) of the corresponding lateral element (51, 52) of the steering column body (7).

3. Steering column according to Claim 1, **characterized in that** each articulation element is constituted by a rivet (65) with a head (67) at its external end and a smooth cylindrical portion (66), whose internal end is engaged in a smooth hole (59, 60) of the corresponding lateral element (51, 52), in order to be deformed in the shape of a flange (68) over the internal face (53, 54) of the corresponding lateral element (51, 52).

4. Steering column according to Claim 2 or 3, **characterized in that** the crosspiece with an axial stop (70) is a separate element comprising a cylindrical portion constituted by a tube (71) whose external end is constituted by a flange (72) applied against the head (63, 67) of the articulation element (61, 65) on the one hand, and against the compression spring (79) on the other hand, and whose internal end (73) is applied against the external face (55, 56) of the corresponding lateral element (51, 52).

5. Steering column according to Claims 2 or 3, **characterized in that** the crosspiece with an axial stop is integrated with an articulation element (75, 76) whose head is a flange (77) and whose smooth cylindrical portion (78) has the diameter of the crosspiece with an axial stop.

6. Steering column according to Claim 1, **characterized in that** each adjustment slider (80) comprises a bearing element (81) with a slider (82) which have half of a passage hole (83) whose axis is perpendicular to the bearing element (81), the said slider (82) having a trapezoidal cross-section perpendicular to the sliding plane (9) and parallel with the said axis with a face (84) inclined with respect to the bearing element (81), the cylindrical half hole (83) cooperating with the cylindrical portion (71, 78) of the crosspiece with an axial stop (70, 75, 76), the inclined face (84) being applied against the corresponding sliding face (27, 29-28, 30) and the bearing element (81) being applied against the compression spring (79).

7. Steering column according to Claim 1, **characterized in that** the compression spring is a spring washer (79).

8. Steering column according to Claim 6, **characterized in that** the two adjustment sliders (80) of a same articulation element (61, 65) are connected to each other by a joining element (90) in order to facilitate fitting.

9. Steering column according to Claim 6, **characterized in that** each adjustment slider. (80) comprises an external hook (86) in order to facilitate fitting.

10. Steering column according to Claim 6, **characterized in that** each adjustment slider (80) comprises two internal hooks (85) in order to facilitate fitting.

11. Steering column according to Claim 6, **characterized in that** each adjustment slider (80) comprises scores (87) which are formed on the inclined face (84), in order to constitute grease reserves.

12. Steering column according to any one of the preceding claims, **characterized in that** for each articulation element (61, 65), the two sliding faces (27, 29-28, 30) have the same inclination with respect to the sliding plane (10).

13. Steering column according to any one of Claims 1 to 11, **characterized in that** the structure of each of the two articulations (61, 65) and of each of the two sliding faces are not symmetrical with respect to the vertical plane (8) of the steering axis (3) and with respect to the sliding plane (10).

14. Steering column according to Claim 12, **characterized in that** the structure of each of the two articulations (61, 65) and of each of the two sliding faces are symmetrical with respect to the vertical plane (8) of the steering axis (3) and with respect to the sliding plane (10).

## Patentansprüche

1. Lenksäule für ein Kraftfahrzeug, eine Lenksäulengehäuse-Einheit (7) mit einem Rohrgehäuse (2) umfassend, in das eine Lenkwelle (1) eingebaut ist, die sich um eine Lenkachse (3) dreht, wobei die Säulengehäuse-Einheit (7) auf einer Träger-Einheit (6) angebracht ist, die fest mit der Fahrzeugstruktur verbunden ist, wobei die Lenksäule in der Höhe und Tiefe mittels eines Feststellsystems (4) verstellbar ist, das eine verriegelte und eine entriegelte Position zulässt und dessen Feststellachse (5) im Wesentlichen senkrecht zur vertikalen Ebene (8) ist, die durch die Lenkachse (3) verläuft, und wobei die Lenksäule eine Gleitschwenkvorrichtung umfasst, die eine Gelenk- und eine Gleitfunktion hat, und folgende Merkmalen besitzt:
- die Lenksäulengehäuse-Einheit (7) umfasst zwei seitliche Elemente (51, 52), die zu beiden Seiten der vertikalen Ebene (8) angeordnet sind und durch mindestens ein Verbindungselement (50) miteinander verbunden sind;
- jedes seitliche Element (51, 52) umfasst ein Gelenkelement (61, 65), das mit dem seitlichen Element (51, 52) fest verbunden ist, so dass dieses sich um die Achse des Gelenkelements (61, 65), d.h. die Schwenkachse, drehen kann, wobei die Achsen der beiden Gelenkelemente (61, 65) in der Verlängerung der jeweils anderen Achse auf einer Schwenkachse (9) liegen, die im Wesentlichen parallel zur vertikalen Ebene (8) verläuft;
- die Träger-Einheit (6) umfasst zwei seitliche Stege (21, 22), die über ein Verbindungselement (23) miteinander verbunden und auf beiden Seiten der vertikalen Ebene angeordnet sind, so dass das Lenksäulengehäuse (7) zwischen den beiden Stegen (21, 23) angeordnet werden kann;
die Lenksäule ist **dadurch gekennzeichnet, dass**:
- jeder seitliche Steg (21, 22) eine seitliche Vertiefung (25, 26) aufweist, die in Richtung der vertikalen Ebene (8) zeigt und die von zwei Gleitflächen (27, 29-28, 30) gebildet wird, von denen jede einerseits mit dem seitlichen Steg (21, 22) und andererseits mit einer Verbindungsbodenplatte (31, 32) verbunden ist, die die Gleitflächen (27, 29-28, 30) miteinander verbindet;
- die beiden Gleitflächen (27, 29-28, 30) haben eine Gleitachse, die parallel zu ein und derselben Gleitebene (10) ist, die durch die Schwenkachse (9) verläuft und im Wesentlichen senkrecht zur vertikalen Ebene steht, wobei jede Verschiebungssachse zu der genannten senkrechten Ebene parallel ist;
- die beiden Gleitflächen (27, 29-28, 30) sind gegenüber der Gleitebene (10) so geneigt, dass sie aufeinander zulaufen, um keine Verschiebung in der Höhe zu ermöglichen;
- jede Verbindungsbodenplatte (31, 32) besitzt ein Langloch (39, 40) mit einer Gleitachse (33, 34), die in der Gleitebene (10) liegt;
- ein Abstandshalter mit Axialanschlag (70) befindet sich auf jedem Gelenkelement (61, 65) und sitzt zwischen der Außenseite (55, 56) des jeweiligen seitlichen Elements (51, 52) und der Innenfläche eines Kopfes (63), der am äußeren Ende des Gelenkelements (61, 65) angebracht ist;
- eine Einheit aus zwei Verstellgliedern (80) ist auf jedem Gelenkelement (61, 65) angebracht, und sie sind auf beiden Seiten der Gleitebene (10) zwischen der jeweiligen Gleitfläche (27, 29-28, 30) und dem Abstandshalter mit Axialanschlag (70) angeordnet;
- eine Druckfeder (79) ist auf dem Abstandshalter mit Axialanschlag (70) des entsprechenden Gelenkelements (61, 65) angebracht und drückt einerseits gegen den Abstandshalter mit Axialanschlag (70), der am Kopf (63, 67) anliegt, und andererseits gegen die beiden zugehörigen Verstellglieder (80) mit einer bestimmten Vorspannung, so dass die Lenksäule beim Verstellen in der entriegelten Position ohne Spiel gleitet und es zu keiner Höhenverschiebung bei einem Aufprall in der verriegelten Position kommt.

2. Lenksäule gemäß Anspruch 1, **dadurch gekennzeichnet, dass** jedes Gelenkelement von einer Schraube (61) gebildet wird, die einen glatten zylindrischen Teil (62), einen Kopf (63) am äußeren Ende und einen Teil mit Gewinde (64) am inneren Ende aufweist und die in eine Öffnung mit Gewinde (57, 58) des jeweiligen seitlichen Elements (51, 52) des Lenksäulengehäuses (7) eingeschraubt wird.

3. Lenksäule gemäß Anspruch 1, **dadurch gekennzeichnet, dass** jedes Gelenkelement von einer Niete (65) gebildet wird, die einen Kopf (67) am äußeren Ende und einen glatten zylindrischen Teil (66) umfasst und deren inneres Ende in eine glatte Öffnung (59, 60) des jeweiligen seitlichen Elements hineinreicht, um zu einem Bund (68) auf der Innenseite (53, 54) des jeweiligen seitlichen Elements (51, 52) verformt zu werden.

4. Lenksäule gemäß Anspruch 2 oder 3, **dadurch gekennzeichnet, dass** der Abstandshalter mit Axialanschlag (70) ein separates Element mit einem zylindrischen Teil ist, der aus einem Rohr (71) besteht, dessen äußeres Ende von einem Bund (72) gebildet wird, der am Kopf (63, 67) des Gelenkelements (61, 65) einerseits und an der Druckfeder (79) andererseits anliegt, und dessen inneres Ende an der Außenseite (55, 56) des jeweiligen seitlichen Elements (55, 56) anliegt.

5. Lenksäule gemäß Anspruch 2 oder 3, **dadurch gekennzeichnet, dass** der Abstandshalter mit Axialanschlag (70) in ein Gelenkelement (75, 76) integriert ist, dessen Kopf ein Bund (77) ist und dessen glatter zylindrische Teil (78) den Durchmesser des Abstandshalters mit Axialanschlag hat.

6. Lenksäule gemäß Anspruch 1, **dadurch gekennzeichnet, dass** jedes Verstellglied 80) ein Auflageelement (81) mit einem Gleitschuh (82) umfasst, die jeweils ein halbes Durchgangsloch (83) in der zum Auflageelement senkrechten Achse aufweisen, wobei der Gleitschuh (82) senkrecht zur Gleitebene (9) und parallel zur genannten Achse einen trapezförmigen Durchschnitt hat, mit einer gegenüber dem Auflageelement (81) geneigten Fläche; die zylindrische Halböffnung (83) wirkt dabei mit dem zylindrischen Teil (71, 78) des Abstandshalters mit Axialanschlag (70, 75, 76) zusammen, die geneigte Fläche (84) liegt an der jeweiligen Gleitfläche (27, 29-28, 39) an und das Auflageelement an der Druckfeder (79).

7. Lenksäule gemäß Anspruch 1, **dadurch gekennzeichnet, dass** die Druckfeder ein Federring (79) ist.

8. Lenksäule gemäß Anspruch 6, **dadurch gekennzeichnet, dass** die beiden Verstellglieder (80) ein und desselben Gelenkelements (61, 65) miteinander mittels einer Verbindungsstelle (90) zur Erleichterung der Montage verbunden sind.

9. Lenksäule gemäß Anspruch 6, **dadurch gekennzeichnet, dass** jedes Verstellglied (80) eine äußere Kralle zur Erleichterung der Montage umfasst.

10. Lenksäule gemäß Anspruch 6, **dadurch gekennzeichnet, dass** jedes Einstellglied (80) zwei innere Krallen zur Erleichterung der Montage umfasst.

11. Lenksäule gemäß Anspruch 6, **dadurch gekennzeichnet, dass** jedes Verstellglied (80) Riffen (87) umfasst, die sich auf der geneigten Fläche (84) befinden, um Aussparungen zur Aufnahme von Schmierfett zu bilden.

12. Lenksäule gemäß einem beliebigen der vorangegangenen Ansprüche, **dadurch gekennzeichnet, dass** für jedes Gelenkelement (61, 65) die beiden Gleitflächen (27, 29-28, 30) dieselbe Neigung gegenüber der Gleitebene (10) aufweisen.

13. Lenksäule gemäß einem beliebigen der Ansprüche 1 bis 11, **dadurch gekennzeichnet, dass** der Aufbau eines jeden der beiden Gelenkelemente (61, 65) und einer jeden der beiden Gleitflächen gemessen zur senkrechten Ebene (8) der Lenkachse (3) und zur Gleitebene (10) nicht symmetrisch ist.

14. Lenksäule gemäß Anspruch 12, **dadurch gekennzeichnet, dass** der Aufbau eines jeden der beiden Gelenkelemente (61, 65) und einer jeden der beiden Gleitflächen gemessen zur senkrechten Ebene (8) der Lenkachse (3) und zur Gleitebene (10) symmetrisch ist.
